# EUROPÄISCHE PATENTSCHRIFT

(11) **EP 3 983 676 B1**
(45) Veröffentlichungstag und Bekanntmachung des Hinweises auf die Patenterteilung: **05.07.2023**
(21) Anmeldenummer: 20732125.8
(22) Anmeldetag: 29.05.2020
(51) Int. Cl.: F04B 1/04, F04B 1/32, F04B 49/06, F04B 11/00, F04B 13/00, F04B 1/0421, F04B 1/324

(54) **VORRICHTUNG UND VERFAHREN ZUM BEREITSTELLEN VON DRUCKBEAUFSCHLAGTEM MEDIUM ZUR INJEKTION IN EINEN HOCHDRUCK-PROZESS**
DEVICE AND METHOD FOR PROVIDING PRESSURIZATION OF A MEDIUM FOR INJECTION IN A HIGH-PRESSURE PROCESS
DISPOSITIF ET PROCÉDÉ POUR FOURNIR PRESSURISATION D'UN MILIEU POUR INJECTION DANS UN PROCESSUS À HAUTE PRESSION

(30) Priorität: 14.06.2019 DE 102019208707
(43) Veröffentlichungstag der Anmeldung: 20.04.2022
(73) Patentinhaber: Uhde High Pressure Technologies GmbH, 58093 Hagen (DE); thyssenkrupp AG, 45143 Essen (DE)
(72) Erfinder: WERTH, Holger, 59423 Unna (DE); COSACK, Alexander, 44869 Bochum (DE)
(74) Vertreter: thyssenkrupp Intellectual Property GmbH
(86) Internationale Anmeldenummer: PCT/EP2020/064936
(87) Internationale Veröffentlichungsnummer: WO 2020/249407

(56) Entgegenhaltungen:
- EP-A1- 3 369 527
- EP-A2- 3 012 453
- US-A- 6 135 719

## Beschreibung

### TECHNISCHES GEBIET

Die Erfindung betrifft eine Vorrichtung und ein Verfahren zum Bereitstellen von druckbeaufschlagtem Medium zur Injektion in einen Hochdruck-Prozess. Insbesondere betrifft die Erfindung eine Vorrichtung und ein Verfahren gemäß dem Oberbegriff des jeweiligen unabhängigen oder nebengeordneten Anspruchs.

### HINTERGRUND

Pumpen sind für anlagen- und steuerungstechnische Aufgaben in diversen Anordnungen und Verfahren unentbehrlich, insbesondere auch bei Hochdruckanwendungen, speziell bei Hochdruckbehandlungen bei vergleichsweise moderaten Drücken von z.B. 300 bis 600bar oder bei vergleichsweise hohen Drücken oberhalb von 3.000bar, bis z.B. 10.000bar. Generell können auch alle chemischen Hochdruck-Prozesse als beispielhaftes Anwendungsgebiet genannt werden. In vielen Prozessen müssen an bestimmten Stellen der Prozesse Medien oder dergleichen Mittel in den Prozess injiziert werden, bei möglichst exakter Steuer-/Regelbarkeit. Beispielsweise müssen Comonomere injiziert werden. Die korrekte Art und Weise des Injizierens ist für den Gesamtprozess von hoher Bedeutung. Das Injizieren bzw. das Einspritzen, Eindüsen oder Einpressen ist z.B. zwischen einzelnen in Serie geschalteten Kompressoren erforderlich, und/oder stromauf und/oder stromab von und/oder an Reaktoren, beispielsweise in einer Anlage zum Hochdruckbehandeln unter Verwendung von Ethylen, insbesondere mit wenigstens einem Hochdruckkreislauf oder Hochdrucksystem. Beispielsweise werden Comonomere, Modifikatoren (Modifiziermittel) und/oder Initiatoren bzw. Katalysatoren (katalytische Mittel) injiziert. Beispielsweise wird an drei bis fünf Stellen injiziert, insbesondere stromab von einem ersten Kompressor, stromab von einem zweiten Kompressor, und an einer oder mehreren Stellen am/im Reaktor.

Beispiele für Typen vom diesbezüglich anwendbaren Pumpen sind Einspritzpumpen, Einpresspumpen, Injizierpumpen. Üblicherweise wurden bisher gern hydraulische doppeltwirkende Pumpen (engl.: double acting pumps) verwendet, insbesondere für das Injizieren von katalytischen Mitteln. Bei dieser Art von bidirektional wirkenden Pumpen muss jedoch in Kauf genommen werden, dass Druckschwankungen nicht vermeidbar sind oder nicht gänzlich eliminiert werden können, insbesondere wenigstens ein Druckabfall jeweils beim Umschalten bzw. beim Richtungswechsel eines Kolbens. Dies kann insbesondere auch aufgrund der Periodizität Nachteile mit sich bringen, was sich z.B. in einem Pulsieren des Druckniveaus auswirkt. Merkmale von doppeltwirkenden Pumpen sind insbesondere:
- (nur) hydraulischer Umschalter;
- traditionelle zuverlässige bewährte Technologie;
- minimierter Aufwand für Wartung und Instandsetzung.

Dokument EP 3 012 453 A2 offenbart ein eine Pumpeninjektionsanordnung eingerichtet zum Injizieren von wenigstens einem Medium an wenigstens einer Prozessstelle in einem Hochdruck-Prozess, mit einer Injektionspumpenvorrichtung für das wenigstens ein Medium, und mit einer an die Injektionspumpenvorrichtung gekoppelten Regeleinheit, eingerichtet zum Regeln des Injizierens durch die Injektionspumpenvorrichtung.

Ausgehend von dieser traditionellen Technologie wurden bereits Versuche unternommen, doppeltwirkende Pumpen durch einfach wirkende phasengeregelte Vorlaufpumpen zu ersetzen. Insbesondere können unidirektional wirkende phasengeregelte Vorlaufpumpen (engl.: phased flow pumps) auch besonders vorteilhaft dafür verwendet werden, um eine möglichst konstante, homogene Art und Weise der Injektion zu erzielen. Als weitere bekannte Vorteile, die sich mittels unidirektionalen phasengeregelten Pumpen realisieren lassen, können insbesondere genannt werden:
- Wartungsintervalle größer zwei Jahre, insbesondere auch bezüglich Ventilen;
- stabiler Prozess, insbesondere dank Phasenregelung;
- hohe Betriebsbereitschaft, gute Verfügbarkeit bzw. Disponibilität;
- vorteilhafte Stand-by-Eigenschaften.

Andererseits können die Vorteile von phasengeregelten Vorlaufpumpen nicht in allen Anordnungen zielführend genutzt werden. Beispielsweise kann der anlagen- oder prozesstechnische Aufwand bei Verwendung von phasengeregelten Vorlaufpumpen vergleichsweise hoch werden.

Das Optimieren der Pumpentechnologie kann in vielen Fällen nur am Einzelfall erfolgen. Pauschale Optimierungs-Empfehlungen sind eher nicht abrufbar, oder berücksichtigen nicht den Einzelfall. In vielen Fällen muss für jede Anlage ein individueller Kompromiss gefunden werden, insbesondere in Hinblick auf Durchsatz bzw. Durchfluss bzw. Förderleistung, Prozess-Stabilität, Genauigkeit bzw. Reproduzierbarkeit, Anlagen- und Verfahrenskosten. Letztlich muss oftmals für jede einzelne Pumpe auf enge Kundenanforderungen reagiert werden.

Neuere technologische Entwicklungen sollen beispielsweise auch in die Richtung von Pumpen mit im Vergleich zu doppeltwirkenden Pumpen verbesserter Druck-Charakteristik fokussiert werden, insbesondere um eine möglichst konstante, homogene Art und Weise der Injektion zu erzielen. Somit besteht Interesse an weiteren zielführenden Maßnahmen zum Bereitstellen einer auf einfache Weise optimierbaren Pumpen-Architektur.

### BESCHREIBUNG DER ERFINDUNG

Aufgabe der Erfindung ist es, eine Vorrichtung und ein Verfahren mit den eingangs beschriebenen Merkmalen zur Verfügung zu stellen, womit das Injizieren von Medien in Hochdruckprozessen auf optimierte Weise erfolgen kann, insbesondere mindestens vergleichbar zu den bisher bereits mittels phasengeregelten Vorlaufpumpen realisierbaren Pump-Charakteristika bzw. Druck- Charakteristika, insbesondere möglichst unter Vermeidung von Druckpulsationen aufgrund wiederkehrenden technologisch bedingten Druckabfalls. Insbesondere ist es auch Aufgabe, die PumpenTechnologie derart bereitzustellen, dass ein gewünschtes Druckniveau bei vertretbarem anlagentechnischen Aufwand auf möglichst exakte Weise konstant über einen definierbaren Zeitraum sichergestellt werden kann, insbesondere auch bei vergleichsweise großen Förderleistungen, insbesondere auf Hochdruckniveau.

Diese Aufgabe wird gelöst durch eine Vorrichtung und ein Verfahren gemäß den unabhängigen Patentansprüchen. Vorteilhafte Ausführungsbeispiele werden in den Unteransprüchen aufgeführt.

Diese Aufgabe wird erfindungsgemäß gelöst durch ein Hochdrucksystem umfassend zumindest für Hochdruck eingerichtete Behälter, einen primären Kompressor, einen sekundären Kompressor, einen Hochdruckreaktor, einen Hochdruck-Separator, einen Niederdruck-Separator sowie eine Pumpeninjektionsanordnung eingerichtet zum Injizieren von wenigstens einem Medium in den Hochdruckreaktor und/oder stromauf des Hochdruckreaktors in wenigstens einem Polymerisations-Hochdruck-Prozess auf wenigstens zwei unterschiedlichen Druckniveaus, wobei die Pumpeninjektionsanordnung
- eine Mehrzahl von Injektionspumpenvorrichtungen für wenigstens ein Medium umfassend Olefine, Substanzen mit Doppelbindung, Alkene, Propylen oder dergleichen, aufweist und wobei die Injektionspumpenvorrichtungen an dem Hochdruckreaktor und/oder an einem oder mehreren Hochdruckleitungsabschnitt(en) stromauf vom Reaktor gekoppelt sind; sowie
- eine an die Injektionspumpenvorrichtungen gekoppelten Regeleinheit eingerichtet zum Regeln des Injizierens durch wenigstens zwei der Injektionspumpenvorrichtungen aufweist; wobei die Pumpeninjektionsanordnung eingerichtet ist zum synchronisierten Regeln der Injektionspumpenvorrichtungen in Abhängigkeit voneinander sowie zum Injizieren des Mediums bei Durchflussraten größer 150 Liter pro Stunde;
und wobei wenigstens zwei der synchron aufeinander eingeregelten Injektionspumpenvorrichtungen als doppeltwirkende bidirektional arbeitende Hochdruckpumpen ausgestaltet sind, welche wenigstens einfach redundant regelungstechnisch derart mit der Regeleinheit gekoppelt sind, dass der Druck über wenigstens zwei Achsen erzeugt ist und das druckbeaufschlagte Medium über eine Hochdruckleitung zur Injektion bereitgestellt ist.

Die Hochdruckleitung bzw. die gemeinsame Hochdruckleitung kann eine einzige Hochdruckleitung für alle Pumpeninjektionsanordnungen sein.

Das erfindungsgemäße Konzept kann auch wie folgt beschrieben werden: Traditionelle doppeltwirkende Pumpen werden in einer Mehrzahl in regelungstechnischer Kombination miteinander verschaltet, um insbesondere die Nachteile von phasengeregelten Pumpen bei hohen Durchsätzen zu überwinden.

Die erfindungsgemäßen Maßnahmen liefern auch Kostenvorteile, insbesondere ab größeren Durchflussraten. Dabei hat sich auch gezeigt, dass basierend auf phasengeregelten Pumpen der Aufwand für Verstärker (Druckerhöher) vergleichsweise hoch wird (insbesondere aufgrund großer Mengen an hydraulischem Medium, großer Größe der hydraulischen Armaturen).

Die Injektionspumpenvorrichtungen können beispielsweise an einen Hochdruckreaktor gekoppelt sein, und/oder an eine oder mehrere (Hochdruck-)Leitungsabschnitte stromauf vom Reaktor.

Das injizierte Medium umfasst beispielsweise Olefine, Substanzen mit Doppelbindung, Alkene, Propylen oder dergleichen.

Dabei kann der Begriff "Pumpeninjektionsanordnung" bzw. "Pumpe" auch Druckübersetzer umfassen. Anders ausgedrückt: Der Begriff "bidirektionale Pumpe" kann auch doppeltwirkende Druckübersetzer umfassen.

Gemäß einem Ausführungsbeispiel sind die Injektionspumpenvorrichtungen derart in Abhängigkeit voneinander synchronisiert, dass ein Phasenversatz von 180° von Kolben von wenigstens zwei der bidirektionalen Injektionspumpenvorrichtungen eingestellt wird. Hierdurch kann bereits mit nur zwei miteinander verschalteten bidirektionalen Pumpen eine sehr vorteilhafte Anordnung bereitgestellt werden. Dies ermöglicht auch einen optimierten Aufbau bei minimalem anlagentechnischen Aufwand.

Gemäß einem Ausführungsbeispiel weist die jeweilige doppeltwirkende Hochdruckpumpe einen doppelt wirkenden Hydraulikzylinder auf, welcher derart mit zwei Hochdruckköpfen verbunden ist, dass eine gemeinsame Hochdruckleitung bereitgestellt ist. Hierdurch kann die Druck-Charakteristik auf elegante Weise optimiert werden, insbesondere ohne Verwendung von unidirektionalen arbeitender PumpenTechnologie.

Gemäß einem Ausführungsbeispiel weist die Pumpeninjektionsanordnung wenigstens einen an eine oder mehrere Achsen der Pumpeninjektionsanordnung gekoppelten linearen Positions-Umwandler auf. Dies begünstigt eine exakte lageabhängige Regelung. Insbesondere kann ein jeweiliger Kolben exakt überwacht werden.

Beispielsweise weist die Pumpeninjektionsanordnung wenigstens eine doppeltwirkende Pumpe auf, welche in einem geschlossenen Regelkreis geregelt ist, insbesondere mit der Pumpeninjektionsanordnung umfassend wenigstens einen Positionssensor, bevorzugt einen linearen Positions-Umwandler.

Gemäß einem Ausführungsbeispiel sind die Mehrzahl von Injektionspumpenvorrichtungen mehrerer geschlossener Regelkreise regelungstechnisch gekoppelt, insbesondere mit der Pumpeninjektionsanordnung umfassend an jeder der Pumpeninjektionsanordnung gekoppelte lineare Positions-Umwandler. Hierdurch kann die Art und Weise der Regelung optimiert werden.

Gemäß einem Ausführungsbeispiel ist die Pumpeninjektionsanordnung eingerichtet zum Injizieren des Mediums bei Durchflussraten größer 150 Liter pro Stunde, insbesondere für Medium in Form von Comonomeren, insbesondere stromauf eines Hochdruckreaktors.

Gemäß einem Ausführungsbeispiel umfasst die Pumpeninjektionsanordnung ausschließlich bidirektionale Injektionspumpenvorrichtungen.

Gemäß einem Ausführungsbeispiel weist die Pumpeninjektionsanordnung wenigstens drei Injektionspumpenvorrichtungen für das wenigstens eine Medium auf, wobei wenigstens drei der Injektionspumpenvorrichtungen als doppeltwirkende Hochdruckpumpen ausgestaltet sind, welche wenigstens zweifach redundant regelungstechnisch derart mit der Regeleinheit gekoppelt sind, dass der Druck über wenigstens drei Achsen erzeugbar ist und das druckbeaufschlagte Medium über die gemeinsame Hochdruckleitung zur Injektion bereitstellbar ist. Dies liefert weitere Vorteile. Insbesondere können die zuvor genannten Vorteile weiter konkretisiert werden.

Gemäß einem Ausführungsbeispiel sind die drei Achsen derart synchronisiert, dass ein Phasenversatz von einzelnen Kolben der Injektionspumpenvorrichtungen von maximal 120° eingestellt wird.

Die zuvor genannte Aufgabe wird erfindungsgemäß insbesondere auch gelöst durch ein Verfahren zum Steuern und/oder Regeln einer Pumpeninjektionsanordnung beim Injizieren von wenigstens einem Medium an wenigstens einer Prozess-Stelle in wenigstens einen Hochdruck-Prozess, insbesondere Medium aus der Gruppe Comonomere, Initiatoren, Modifikatoren; insbesondere in einen Hochdruckbehandlungsprozess umfassend einen mehrstufigen Druckaufbau sowie eine Hochdruckreaktion;
wobei das Injizieren mittels einer Mehrzahl von Injektionspumpenvorrichtungen durch eine Regeleinheit auf synchronisierte Weise in Abhängigkeit der Injektionspumpenvorrichtungen voneinander geregelt wird, wobei wenigstens zwei der synchron aufeinander eingeregelten Injektionspumpenvorrichtungen als doppeltwirkende bidirektional arbeitende Hochdruckpumpen betrieben werden und dabei wenigstens einfach redundant regelungstechnisch derart eingeregelt werden, dass der Druck über wenigstens zwei Achsen erzeugt wird und das druckbeaufschlagte Medium über eine gemeinsame Hochdruckleitung zur Injektion bereitgestellt wird. Dies liefert zuvor geschilderte Vorteile.

Als Medium wird/werden beispielsweise Comonomere, Katalysatoren bzw. Initiatoren und/oder Modifikatoren injiziert. Bezüglich Polymerisation als Hochdruckprozess können die verwendbaren Initiatoren auch als Radikalverstärker bezeichnet werden.

Beispielsweise werden an einer ersten Prozess-Stelle stromab von einer ersten Kompressionsstufe und stromauf von einer zweiten Kompressionsstufe Modifikatoren injiziert und Comonomere injiziert, und an einer zweiten Prozess-Stelle stromab von allen Kompressionsstufen werden Comonomere injiziert, und an wenigstens einer Stelle am Reaktor werden Initiatoren injiziert.

Gemäß einer Ausführungsform werden wenigstens zwei der Injektionspumpenvorrichtungen derart mit einem Phasenversatz von 180° der Kolben in Abhängigkeit voneinander eingeregelt.

Gemäß einer Ausführungsform wird das druckbeaufschlagte Medium an der entsprechenden Prozess-Stelle an einer einzigen gemeinsamen Hochdruckleitung aller für diese Prozess-Stelle eingeregelten Injektionspumpenvorrichtungen bereitgestellt.

Gemäß einer Ausführungsform erfolgt die Regelung positionsbezogen basierend auf Messdaten wenigstens eines an eine oder mehrere Achsen der Pumpeninjektionsanordnung gekoppelten linearen Positions-Umwandlers.

Gemäß einer Ausführungsform erfolgt die Regelung in einem geschlossenen Regelkreis. Dies kann insbesondere auch den Autarkie-Grad bzw. die Automatisierung optimieren. Wahlweise können dabei Regelungsparameter in Abhängigkeit von Betriebsparametern der einzelnen Pumpen und/oder in Abhängigkeit von Hochdruckprozessparametern eingestellt werden.

Gemäß einer Ausführungsform werden Comonomere bei Durchflussraten größer 150 Liter pro Stunde oder größer 500 Liter pro Stunde als Medium injiziert, insbesondere derart geregelt, dass die Comonomere ab dieser Pumpleistung ausschließlich mittels doppeltwirkender Pumpen injiziert werden.

Insbesondere bei größer werdendem Durchsatz werden bei unidirektional arbeitenden Systemen aufgrund limitierter Geschwindigkeit eine größere Anzahl an Verstärkern erforderlich. Es hat sich gezeigt, dass bei einem Durchsatz von beispielsweise ca. 500 Litern pro Stunde auf der Hochdruckseite wenigstens sechs phasengeregelte Vorlaufpumpen erforderlich wären. Erfindungsgemäß kann dieser anlagentechnische Aufwand eingespart werden, insbesondere indem bidirektionale Pumpensysteme miteinander verschaltet werden und dabei vollständig auf phasengeregelte Vorlaufpumpen verzichtet wird.

Gemäß einer Ausführungsform wird das druckbeaufschlagte Medium ausschließlich mittels bidirektional arbeitender Injektionspumpenvorrichtungen bereitgestellt.

Gemäß einer Ausführungsform weist die Anordnung wenigstens drei synchron aufeinander eingeregelte Injektionspumpenvorrichtungen auf, welche als doppeltwirkende bidirektional arbeitende Hochdruckpumpen betrieben werden und dabei wenigstens zweifach redundant regelungstechnisch derart eingeregelt werden, dass der Druck über wenigstens drei Achsen erzeugbar wird und das druckbeaufschlagte Medium über die gemeinsame Hochdruckleitung zur Injektion bereitgestellt wird.

Gemäß einer Ausführungsform wird ein Phasenversatz von einzelnen Kolben der Injektionspumpenvorrichtungen von maximal 120° eingestellt, insbesondere bei exakt drei bidirektionalen Injektionspumpenvorrichtungen.

Die zuvor genannte Aufgabe wird erfindungsgemäß auch gelöst durch eine Steuerungseinrichtung eingerichtet zum Ausführen eines zuvor beschriebenen Verfahrens, wobei die Steuerungseinrichtung an wenigstens zwei Injektionspumpenvorrichtungen jeweils in Ausgestaltung als doppeltwirkende bidirektionale Hochdruckpumpen gekoppelt ist, wobei die Steuerungseinrichtung eine Regeleinheit aufweist, die eingerichtet ist zum Einregeln eines Phasenversatzes von 180° oder maximal 120° von zwei oder drei der Injektionspumpenvorrichtungen in Abhängigkeit voneinander.

Die zuvor genannte Aufgabe wird erfindungsgemäß auch gelöst durch Verwendung von wenigstens zwei Injektionspumpenvorrichtungen jeweils in Ausgestaltung als doppeltwirkende bidirektionale Hochdruckpumpen in einem Hochdrucksystem, insbesondere in einer zuvor beschriebenen Pumpeninjektionsanordnung, zum Injizieren von hochdruckbeaufschlagtem Medium, insbesondere zum Injizieren von Comonomeren, insbesondere bei einem zuvor beschriebenen Verfahren, insbesondere bei Durchflussraten für das injizierte Medium von größer 150 Liter pro Stunde, wobei die wenigstens zwei Injektionspumpenvorrichtungen mit einem Phasenversatzes von 180° oder maximal 120° in Abhängigkeit voneinander eingeregelt werden.

### FIGURENBESCHREIBUNG

Weitere Merkmale und Vorteile der Erfindung ergeben sich aus der Beschreibung wenigstens eines Ausführungsbeispiels anhand von Zeichnungen, sowie aus den Zeichnungen selbst. Bei Bezugszeichen, die nicht explizit in Bezug auf eine einzelne Figur beschrieben werden, wird auf die anderen Figuren verwiesen. Dabei zeigt
- Fig. 1: einen exemplarischen Aufbau eines Prozesses, bei welchem die vorliegende Erfindung zur Anwendung bringbar ist;
- Fig. 2: eine Skizze des technischen Aufbaus einer doppeltwirkenden Pumpe;
- Fig. 3A, 3B: eine Illustration der beim Verschalten mehrerer Pumpen realisierbaren Druck-Charakteristik, im Vergleich zum Druckverlauf einer einzelnen traditionellen doppeltwirkenden Pumpe;
- Fig. 4: eine Skizze des technischen Aufbaus einer phasengeregelten Pumpe, beispielsweise verwendbar zur Injektion von Katalysator;
- Fig. 5: eine Skizze des technischen Aufbaus einer doppeltwirkenden Pumpe mit implementiertem offenem Regelkreis, zur optionalen Verwendung bzw. Implementierung in einer erfindungsgemäßen Pumpeninjektionsanordnung;
- Fig. 6: eine Skizze des technischen Aufbaus einer doppeltwirkenden Pumpe mit implementiertem geschlossenen Regelkreis, zur erfindungsgemäßen Verwendung bzw. Implementierung in einer Pumpeninjektionsanordnung;
- Fig. 7: eine Skizze des technischen Aufbaus einer erfindungsgemäßen einfach redundanten Pumpeninjektionsanordnung umfassend doppeltwirkende Pumpen, mit zwei Pumpenachsen und mit implementiertem offenem Regelkreis;
- Fig. 8: eine Skizze des technischen Aufbaus einer erfindungsgemäßen zweifach redundanten Pumpeninjektionsanordnung umfassend doppeltwirkende Pumpen, mit drei Pumpenachsen und mit implementiertem offenem Regelkreis;
- Fig. 9: eine Illustration einer regelungstechnischen Option einer erfindungsgemäßen zweifach redundanten Pumpeninjektionsanordnung.

### DETAILLIERTE BESCHREIBUNG DER FIGUREN

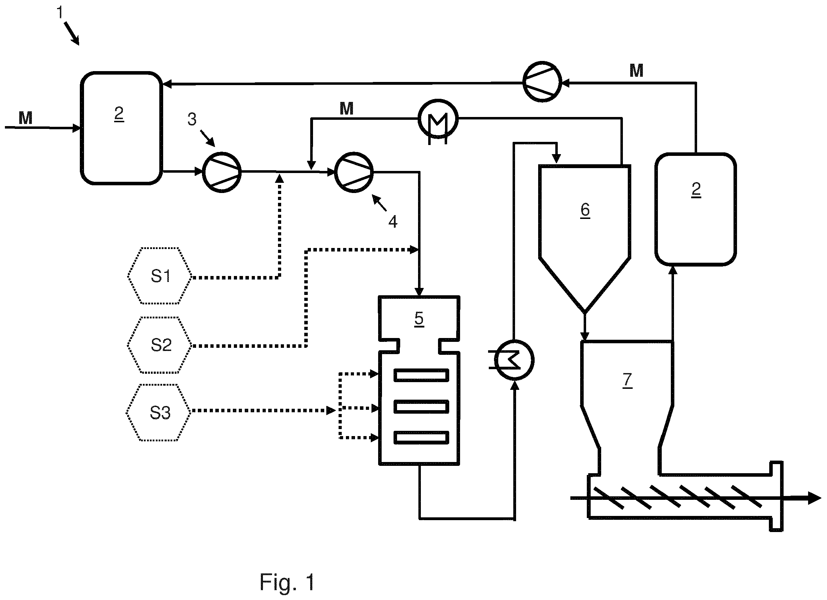

Die Fig. 1 zeigt einen beispielhaften Hochdruckbehandlungsprozess mit mehreren Injektions-Stellen. Ein Hochdrucksystem 1 umfasst für Hochdruck eingerichtete Behälter 2, einen primären Kompressor 3, einen sekundären Kompressor 4 (insbesondere Hyper-Kompressor), einen Reaktor 5, einen Hochdruck-Separator 6 und einen Niederdruck-Separator 7. Prozess-Medium M, beispielsweise Ethylen, wird vom ersten Behälter 2 über die Kompressoren und den Reaktor und die Separatoren zum zweiten Behälter 2 geführt, und vom zweiten Behälter 2 zurück zum ersten Behälter 2 zurück geführt, wobei auch ein interner Rückführ-Kreislauf vom Hochdruck-Separator 6 vor den Hyperkompressor 4 vorgesehen ist. Das Prozess-Medium M ist ungleich dem injizierten Medium.

Eine Injektion von Medium erfolgt beispielsweise an wenigstens drei Prozess-Stellen, insbesondre jeweils mittels einer individuellen Pumpeninjektionsanordnung, oder wahlweise auch mittels einer einzigen Pumpeninjektionsanordnung für wenigstens zwei oder mehr Prozess-Stellen. Für jeden der im folgenden beschriebenen Injektions-Schritte S1, S2, S3 kann dabei eine erfindungsgemäße Pumpenanordnung für den Druckaufbau realisiert werden.

In einem Schritt S1 erfolgt insbesondere eine Injektion von Comonomeren und Modifikatoren, insbesondere auf einem ersten Druckniveau. In einem Schritt S2 erfolgt insbesondere eine Injektion von Comonomeren, insbesondere auf einem zweiten Druckniveau höher als das erste Druckniveau, insbesondere stromab von allen Kompressoren des Prozesses. Dies kann z.B. bei Comonomeren in der Flüssigphase vorteilhaft sein, insbesondere auch zwecke Minimierung der Belastung von Kompressoren. In einem Schritt S3 erfolgt insbesondere eine Injektion von Katalysatoren, insbesondere auf dem zweiten Druckniveau oder auf einem weiteren noch höheren Druckniveau.

Die Schritte S1, S2, S3 deuten beispielhaft an, an welchen Stellen des Prozesses eine Injektion erforderlich werden kann, insbesondere eine Hochdruckinjektion. Im Folgenden wird näher erläutert, mittels welcher Technologie die jeweilige (Hochdruck-)Injektion bevorzugt erfolgen kann. Dabei können auch eine Drucküberwachung und Autofrettage-Schritte durchgeführt werden.

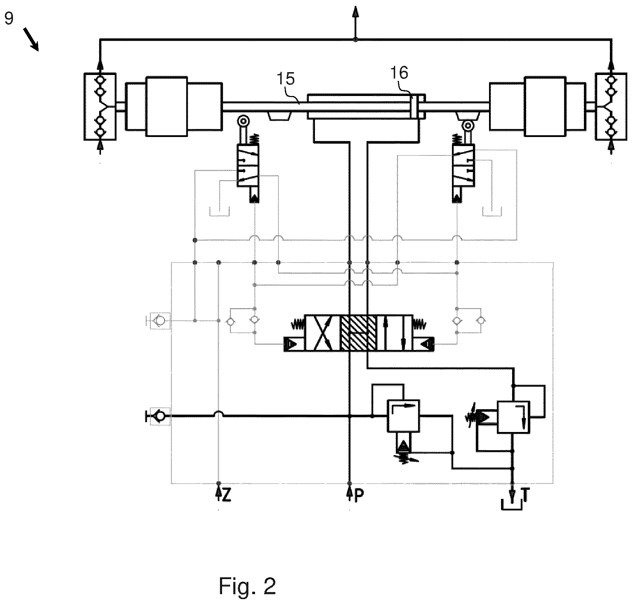

Die Fig. 2 zeigt exemplarisch den Aufbau einer doppeltwirkenden bidirektional arbeitenden Hochdruckpumpe, insbesondere ohne Implementierung einer erfindungsgemäßen Regelung. In einem doppelt wirkenden Hydraulikzylinder arbeitet ein Kolben 16 auf einer Achse 15, die mit zwei so genannten Hochdruckköpfen (Plungerpumpen) verbunden ist.

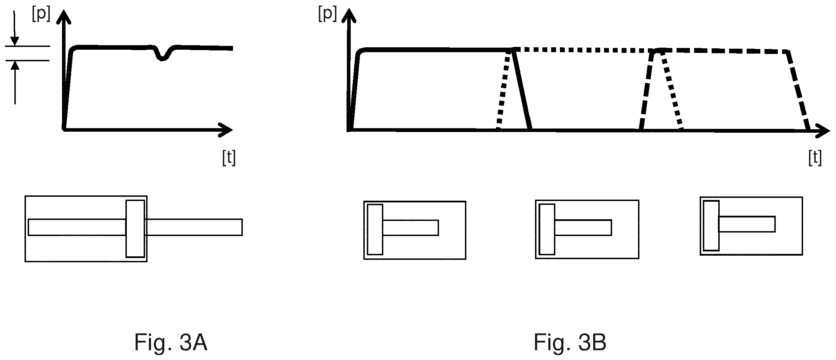

In den in den Fig. 3A, 3B gezeigten Diagrammen ist jeweils der Druck [p] über der Zeit [t] aufgetragen.

Die Fig. 3A illustriert eine Druckpulsation bei Verwendung einer bidirektional wirkenden Pumpe. Diese Pulsation tritt im Betrieb insbesondere periodisch auf und ist je nach Qualität der Pumpe betragsmäßig bzw. prozentual stärker oder schwächer. In Fig. 3A ist unterhalb des Diagramms der Vollständigkeit halber eine schematische Illustration einer doppeltwirkenden Pumpe angegeben.

Die Fig. 3B zeigt eine Pump-Charakteristik bzw. einen Druckverlauf, welcher mittels drei miteinander verschalteten unidirektionalen Pumpen realisierbar ist. Druckpulsationen können zumindest weitgehend vermieden werden. Eine jeweilige Pumpe wird von einer der weiteren Pumpen abgelöst, sobald die weitere Pumpe das gewünschte zu haltende Druckniveau aufgebaut hat (Intervall-Betrieb ohne nennenswerte zeitliche Überlappung). In Fig. 3B ist unterhalb des Diagramms der Vollständigkeit halber eine schematische Illustration von drei einfach wirkenden phasengeregelten Pumpe angegeben.

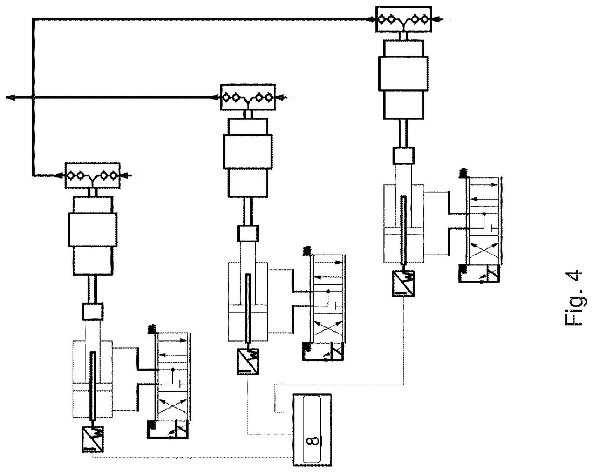

Die Fig. 4 zeigt exemplarisch den Aufbau einer Anordnung von drei unidirektional arbeitenden Hochdruckpumpen. Zur Regelung des Zusammenspiels der einzelnen unidirektional arbeitenden Pumpen ist ein Regler 8 vorgesehen; jede der drei Pumpen ist an den Regler 8 gekoppelt. Vorteile dieser Anordnung: vorteilhafte Druck-Charakteristik; gute Verfügbarkeit. Jedoch kann diese Anordnung insbesondere ab Förderleistungen größer 150 Litern pro Stunde nachteilig werden.

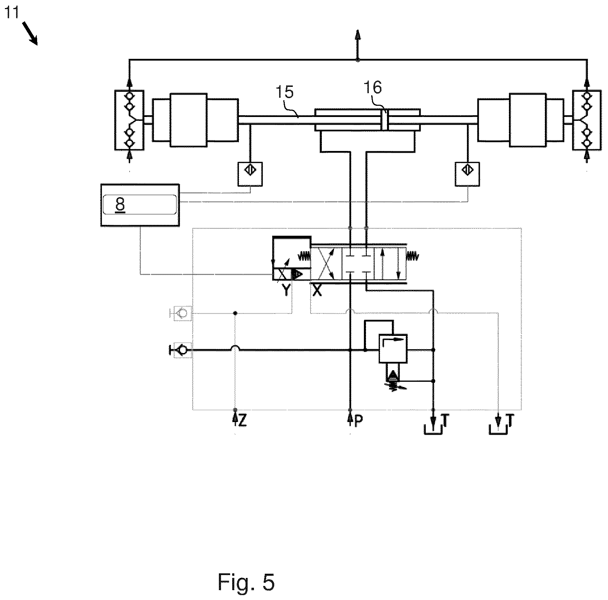

Die Fig. 5 zeigt eine bidirektional arbeitende Pumpeneinheit 11 mit einem Regler 8, welcher die Pumpeneinheit 11 in einer offenen Regelschleife regelt. An der Achse 15 sind beidseitig des Zylinders Näherungsschalter vorgesehen. Vorteile dieser Anordnung: hohe Förderleistung, insbesondere dank vergleichsweise großer Plunger-Größe; Näherungsschalter für Umschaltung; Bewegungs-Regelung basierend auf Mengenverhältnis bzw. mittels Proportionalitäts-Ventil; schnell bzw. prompt einstellbarer Umschalt-Zeitpunkt. Es hat sich gezeigt, dass die Anordnung gemäß Fig. 5 noch weiter optimiert werden kann.

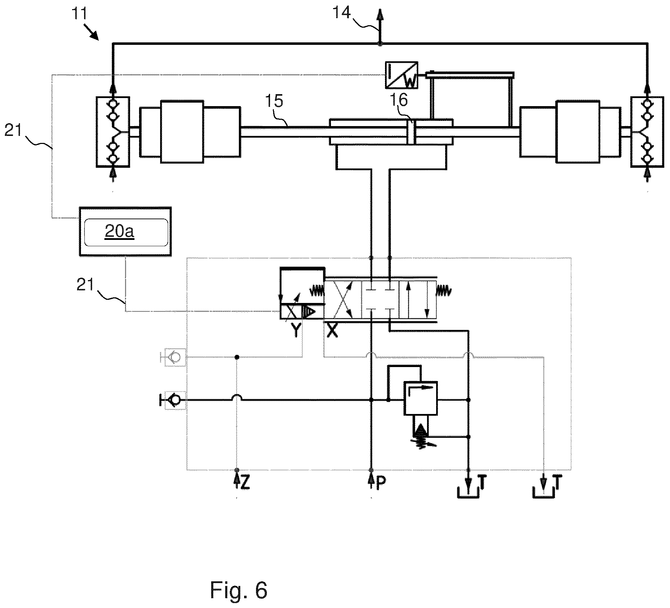

Die Fig. 6 zeigt eine bidirektional arbeitende Pumpeneinheit 11 mit einer Regeleinheit 20a, welche die Pumpeneinheit 11 in einer geschlossenen Regelschleife regelt. Ein linearer Positions-Transducer sowie eine geschlossene PID-Regelschleife ermöglichen einen schnellen autonom geregelten Umschalt-Vorgang. Vorteile dieser Anordnung: optimierte regelungstechnische Eigenschaften, insbesondere auch bei einer Verschaltung mit weiteren bidirektionalen Pumpeneinheiten.

Ein doppelt wirkender Hydraulikzylinder, in welchem ein Kolben 16 arbeitet, ist mit zwei so genannten Hochdruckköpfen (Plungerpumpen) verbunden. Es ist eine doppelt wirkende Hochdruckpumpe mit einer gemeinsamen Hochdruckleitung 14 gebildet. Eine erste Steuerleitung 21 verbindet die Regeleinheit 20a mit den entsprechenden Komponenten der Pumpe 11. Die Regeleinheit 20a ist eingerichtet zum Synchronisieren einer Mehrzahl von bidirektionalen Pumpeneinheiten mit Phasenversatz, insbesondere in Abhängigkeit von der Anzahl der synchronisierten Pumpeneinheiten.

Eine solche doppelt wirkende Pumpe 11 mit einer Achse 15, und insbesondere auch aufweisend ein Wegmesssystem und Proportionalventil für die Hydraulik, kann erfindungsgemäß in einer hinsichtlich Phasenversatz synchronisierten Konfiguration implementiert werden, die optional ganz ohne phasengeregelte Vorlaufpumpen (engl.: phased flow pumps) ausgestaltet ist.

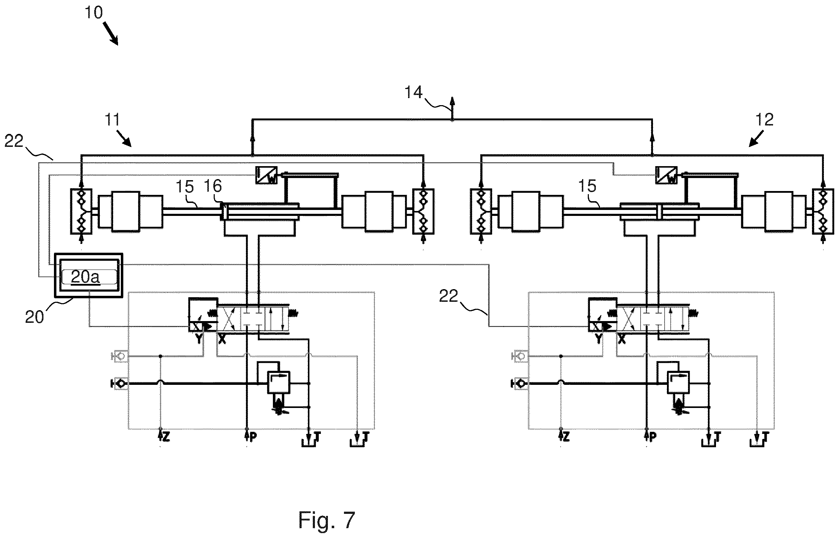

Die Fig. 7 zeigt eine Pumpeninjektionsanordnung 10 gemäß einem ersten Ausführungsbeispiel mit einer Steuerungs-/Regelungseinrichtung 20, welche eine erste Injektionspumpenvorrichtung 11 und eine zweite Injektionspumpenvorrichtung 12 in Abstimmung aufeinander regelt.

In dieser Ausgestaltung als einfach redundante Pumpeninjektionsanordnung 10 mit zwei Achsen 15, jeweils bereitgestellt durch eine Injektionspumpenvorrichtung 11, 12, kann eine vorteilhafte Synchronisation hinsichtlich Phasenversatz bei minimalem anlagentechnischen Aufwand erfolgen. Mittels der Regeleinheit 20a sind zwei Regelkreise 21, 22 synchronisiert, indem ein Phasenversatz von 180° eingestellt wird. Eine der Achsen 15 schaltet um, während sich die andere Achse (bzw. der entsprechende Kolben 16) genau in der Mitte (mittlere Stellung) befindet, und vice versa: erster Kolben 16 im Anschlag, zweiter Kolben in Mittelstellung. Diese zweiachsige Pumpenanordnung liefert im Vergleich zur Ein-Achs-Anordnung einen doppelt so großen Volumenstrom. Es hat sich gezeigt, dass diese zweiachsige Pumpenanordnung für den Volumenstrom einer Ein-Achs-Anordnung mit halber Geschwindigkeit betrieben werden kann. Dies erhöht nicht zuletzt auch die Standzeit der Hochdruck-Komponenten in beträchtlichem Umfang. Wahlweise kann die zweiachsige Anordnung mit nur einer Achse betrieben werden, insbesondere im Falle von Wartungsarbeiten/technischen Fehlern.

Vorteile dieser Anordnung: vergleichsweise geringe Geschwindigkeiten; vergleichsweise geringe Fluktuation bzw. Variation des Durchflussvolumens; optional doppelte Durchflussrate, bei maximaler Betriebslast (maximale KolbenGeschwindigkeit).

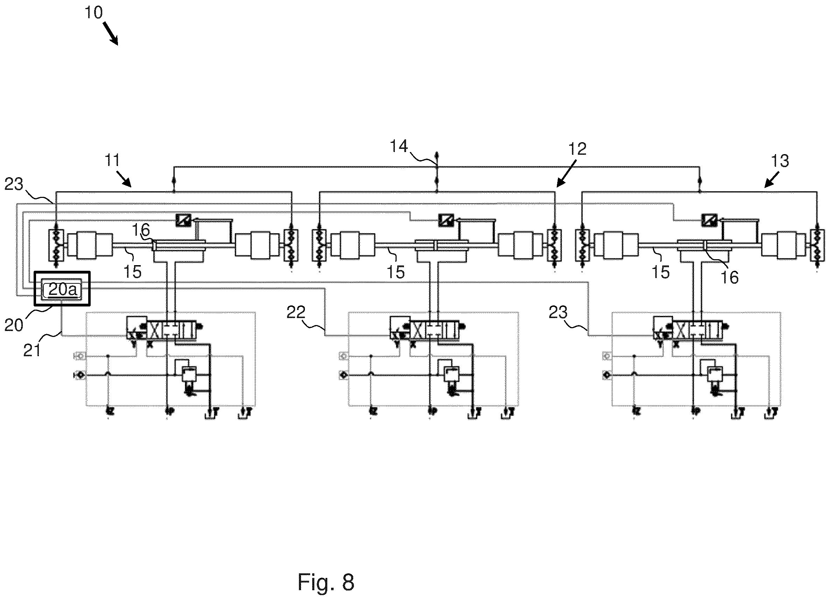

Die Fig. 8 zeigt eine Pumpeninjektionsanordnung 10 gemäß einem zweiten Ausführungsbeispiel mit drei regelungstechnisch aneinander gekoppelten Injektionspumpenvorrichtungen 11, 12, 13 (Drei-Kopf-Anordnung). Die gemeinsame Hochdruckleitung 14 wird von allen drei Injektionspumpenvorrichtungen beschickt.

In dieser Ausgestaltung als zweifach redundante Pumpeninjektionsanordnung 10 mit drei Achsen 15 lassen sich im Vergleich zur Anordnung mit nur zwei Achsen die Vorteile noch spürbarer realisieren, insbesondere auch hinsichtlich Betriebssicherheit. Insbesondere sind die drei individuellen Achsen 15 im Normalbetrieb mit einem Phasenversatz von 120° angeordnet bzw. über die entsprechenden Regelkreise 21, 22, 23 gesteuert/geregelt (erster Kolben 16 im Anschlag, zweiter Kolben 1/3 versetzt; dritter Kolben 2/3 versetzt). Diese Pumpeninjektionsanordnung 10 liefert beispielsweise denselben maximalen Hochdruck-Volumenstrom wie eine zweiachsige Pumpeninjektionsanordnung. Bei maximalem Volumenstrom kann eine um 1/3 reduzierte Fahrgeschwindigkeit an jeder Achse 15 realisiert werden. Jede Achse fährt nur auf 2/3 ihrer mechanisch/technisch möglichen maximalen Geschwindigkeit, was auch eine besonders schonenden Betriebsweise sicherstellt.

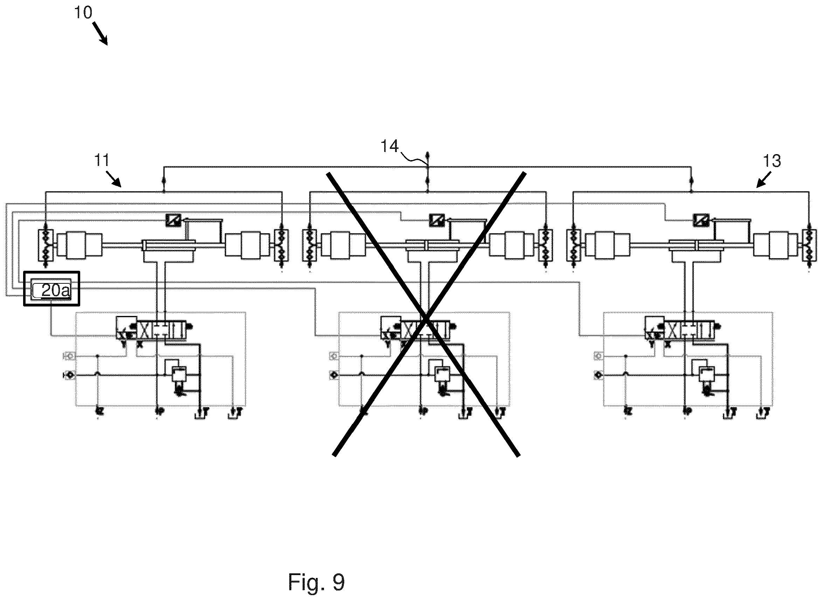

Mittels der in Fig. 8 gezeigten Anordnung können die erfindungsgemäßen Vorteile noch umfassender sichergestellt werden, insbesondere auch in Hinblick auf noch pulsationsärmeren Betrieb, oder auch in Hinblick auf größere Ausfall-Sicherheit oder zusätzliche Wartungs-Optionen, wie in Fig. 9 illustriert: Optional kann eine der drei doppelt wirkenden Pumpen 11, 12, 13 ausgeschaltet bzw. von der Pumpeninjektionsanordnung 10 entkoppelt werden (hier beispielhaft die mittlere Injektionspumpenvorrichtung 12).

Fällt eine der Achsen 15 aus Wartungsgründen oder technischen Fehlern aus, können die zwei übrigen Achsen auf die mechanisch/technisch mögliche Geschwindigkeit beschleunigt und der Phasenversatz auf 180° angepasst werden. Somit kann der Volumenstrom der gesamten Anordnung konstant gehalten werden, und die Pulsation wird auch in außerordentlichen Situationen wird minimiert. Anders ausgedrückt: Zusätzlich zu den bezüglich Figur 7 bereits erwähnten Vorteilen lassen sich auch Vorteile hinsichtlich Stand-By-Eigenschaften realisieren.

### Bezugszeichenliste

- 1: Hochdrucksystem
- 2: (Hochdruck-)Behälter (Puffer, Sammelbehälter)
- 3: Primärer Kompressor
- 4: Sekundärer Kompressor, insbesondere Hyper-Kompressor
- 5: Reaktor
- 6: Hochdruck-Separator
- 7: Niederdruck-Separator
- 8: Regler
- 9: doppeltwirkende Hochdruckpumpe, insbesondere ungeregelt
- 10: Pumpeninjektionsanordnung
- 11: erste Injektionspumpenvorrichtung, insbesondere doppeltwirkende Hochdruckpumpe
- 12: zweite Injektionspumpenvorrichtung, insbesondere doppeltwirkende Hochdruckpumpe
- 13: dritte Injektionspumpenvorrichtung, insbesondere doppeltwirkende Hochdruckpumpe
- 14: (gemeinsame) Hochdruckleitung, zur Injektion
- 15: individuelle Pumpenachse
- 16: Kolben
- 20: Steuerung-/Regelungseinrichtung
- 20a: Regeleinheit (engl.: controller unit)
- 21: erste Steuerleitung
- 22: zweite Steuerleitung
- 23: dritte Steuerleitung

- M: Prozess-Medium, insbesondere Ethylen
- S1: Schritt 1, insbesondere Injektion von Comonomeren und Modifikatoren
- S2: Schritt 1, insbesondere Injektion von Comonomeren
- S3: Schritt 1, insbesondere Injektion von Katalysatoren
- p: Druck
- t: Zeit

## Patentansprüche

1. Hochdrucksystem (1) umfassend zumindest für Hochdruck eingerichtete Behälter (2), einen primären Kompressor (3), einen sekundären Kompressor (4), einen Hochdruckreaktor (5), einen Hochdruck-Separator (6), einen Niederdruck-Separator (7) sowie eine Pumpeninjektionsanordnung (10) eingerichtet zum Injizieren von wenigstens einem Medium in den Hochdruckreaktor (5) und/oder stromauf des Hochdruckreaktors (5) in wenigstens einem Polymerisations-Hochdruck-Prozess auf wenigstens zwei unterschiedlichen Druckniveaus, wobei die Pumpeninjektionsanordnung (10)
- eine Mehrzahl von Injektionspumpenvorrichtungen (11, 12, 13) für wenigstens ein Medium umfassend Olefine, Substanzen mit Doppelbindung, Alkene, Propylen oder dergleichen, aufweist und wobei die Injektionspumpenvorrichtungen (11, 12, 13) an dem Hochdruckreaktor (5) und/oder an einem oder mehreren Hochdruckleitungsabschnitt(en) stromauf vom Reaktor gekoppelt sind; sowie
- eine an die Injektionspumpenvorrichtungen gekoppelten Regeleinheit (20a) eingerichtet zum Regeln des Injizierens durch wenigstens zwei der Injektionspumpenvorrichtungen aufweist;
wobei die Pumpeninjektionsanordnung (10) eingerichtet ist zum synchronisierten Regeln der Injektionspumpenvorrichtungen (11, 12, 13) in Abhängigkeit voneinander sowie zum Injizieren des Mediums bei Durchflussraten größer 150 Liter pro Stunde;
und wobei wenigstens zwei der synchron aufeinander eingeregelten Injektionspumpenvorrichtungen (11, 12, 13) als doppeltwirkende bidirektional arbeitende Hochdruckpumpen ausgestaltet sind, welche wenigstens einfach redundant regelungstechnisch derart mit der Regeleinheit (20a) gekoppelt sind, dass der Druck über wenigstens zwei Achsen (15) erzeugt ist und das druckbeaufschlagte Medium über eine Hochdruckleitung (14) zur Injektion bereitgestellt ist.

2. Hochdrucksystem (1) nach Anspruch 1, wobei die
Injektionspumpenvorrichtungen (11, 12, 13) derart in Abhängigkeit voneinander synchronisiert sind, dass ein Phasenversatz von 180° von Kolben (16) von wenigstens zwei der bidirektionalen Injektionspumpenvorrichtungen eingestellt wird.

3. Hochdrucksystem (1) nach Anspruch 1 oder 2, wobei die jeweilige doppeltwirkende Hochdruckpumpe einen doppelt wirkenden Hydraulikzylinder aufweist, welcher derart mit zwei Hochdruckköpfen verbunden ist, dass eine Hochdruckleitung (14) bereitgestellt ist.

4. Hochdrucksystem (1) nach einem der vorhergehenden Ansprüche, wobei die Pumpeninjektionsanordnung (10) wenigstens einen an eine oder mehrere Achsen (15) der Pumpeninjektionsanordnung gekoppelten linearen Positions-Umwandler aufweist.

5. Hochdrucksystem (1) nach einem der vorhergehenden Ansprüche, wobei die Mehrzahl von Injektionspumpenvorrichtungen (11, 12, 13) in einem geschlossenen Regelkreis regelungstechnisch gekoppelt sind, insbesondere mit der Pumpeninjektionsanordnung (10) umfassend wenigstens einen an eine oder mehrere Achsen (15) der Pumpeninjektionsanordnung gekoppelten Näherungsschalter.

6. Hochdrucksystem (1) nach einem der vorhergehenden Ansprüche, wobei die Pumpeninjektionsanordnung (10) wenigstens drei Injektionspumpenvorrichtungen (11, 12, 13) für das wenigstens eine Medium aufweist, wobei wenigstens drei der Injektionspumpenvorrichtungen als doppeltwirkende Hochdruckpumpen ausgestaltet sind, welche wenigstens zweifach redundant regelungstechnisch derart mit der Regeleinheit (20a) gekoppelt sind, dass der Druck über wenigstens drei Achsen (15) erzeugt ist und das druckbeaufschlagte Medium über die Hochdruckleitung (14) zur Injektion bereitgestellt ist.

7. Hochdrucksystem (1) nach dem vorhergehenden Anspruch 6 wobei die drei
Achsen (15) derart synchronisiert sind, dass ein Phasenversatz von einzelnen Kolben der Injektionspumpenvorrichtungen von maximal 120° eingestellt wird.

8. Verfahren zum Steuern und/oder Regeln einer Pumpeninjektionsanordnung (10) des Hochdrucksystems (1) gemäß einem der vorangegangenen Vorrichtungsansprüche beim Injizieren von wenigstens einem Medium aus der Gruppe Comonomere, Initiatoren, Modifikatoren an wenigstens einer Prozess-Stelle in wenigstens einen Polymerisations-Hochdruck-Prozess, umfassend einen mehrstufigen Druckaufbau sowie eine Hochdruckreaktion, wobei das Injizieren mittels einer Mehrzahl von Injektionspumpenvorrichtungen (11, 12, 13) durch eine Regeleinheit (20a) auf synchronisierte Weise in Abhängigkeit der Injektionspumpenvorrichtungen (11, 12, 13) voneinander geregelt wird, und wobei wenigstens zwei der synchron aufeinander eingeregelten Injektionspumpenvorrichtungen (11, 12, 13) als doppeltwirkende bidirektional arbeitende Hochdruckpumpen betrieben werden und dabei wenigstens einfach redundant regelungstechnisch derart eingeregelt werden, dass der Druck über wenigstens zwei Achsen erzeugt wird und das druckbeaufschlagte Medium über eine Hochdruckleitung (14) zur Injektion bereitgestellt wird, und wobei das Medium bei Durchflussraten größer 150 Liter pro Stunde oder größer 500 Liter pro Stunde injiziert, und derart geregelt werden, dass das Medium ab dieser Pumpleistung ausschließlich mittels doppeltwirkender Pumpen injiziert wird.

9. Verfahren nach dem vorhergehenden Verfahrensanspruch 8, wobei wenigstens zwei der Injektionspumpenvorrichtungen mit einem Phasenversatz von 180° der Kolben in Abhängigkeit voneinander eingeregelt werden oder wobei ein Phasenversatz von einzelnen Kolben der Injektionspumpenvorrichtungen von maximal 120° eingestellt wird, insbesondere bei exakt drei bidirektionalen I njektionspum penvorrichtungen.

10. Verfahren nach einem der vorhergehenden Verfahrensansprüche, wobei das druckbeaufschlagte Medium an der entsprechenden Prozess-Stelle an einer Hochdruckleitung aller für diese Prozess-Stelle eingeregelten Injektionspumpenvorrichtungen bereitgestellt wird.

11. Verfahren nach einem der vorhergehenden Verfahrensansprüche, wobei die Regelung positionsbezogen basierend auf Messdaten wenigstens eines an eine oder mehrere Achsen der Pumpeninjektionsanordnung gekoppelten linearen Positions-Umwandlers erfolgt.

12. Verfahren nach einem der vorhergehenden Verfahrensansprüche, wobei die Regelung in einem geschlossenen Regelkreis erfolgt.

13. Verfahren nach einem der vorhergehenden Verfahrensansprüche, wobei wenigstens drei der synchron aufeinander eingeregelten Injektionspumpenvorrichtungen als doppeltwirkende bidirektional arbeitende Hochdruckpumpen betrieben werden und dabei wenigstens zweifach redundant regelungstechnisch derart eingeregelt werden, dass der Druck über wenigstens drei Achsen erzeugt wird und das druckbeaufschlagte Medium über eine Hochdruckleitung zur Injektion bereitgestellt wird.

14. Verwendung von wenigstens zwei Injektionspumpenvorrichtungen jeweils in Ausgestaltung als doppeltwirkende bidirektionale Hochdruckpumpen in Kombination mit dem Hochdrucksystem (1) nach einem der vorhergehenden Vorrichtungsansprüche bei einem Polymerisations-Hochdruck-Prozess, zum Injizieren von hochdruckbeaufschlagtem Medium aus der Gruppe Comonomere, Initiatoren, Modifikatoren, in Kombination mit einem Verfahren nach einem der vorhergehenden Verfahrensansprüche, bei Durchflussraten für das injizierte Medium von größer 150 Liter pro Stunde, wobei die wenigstens zwei Injektionspumpenvorrichtungen mit einem Phasenversatzes von 180° oder maximal 120° in Abhängigkeit voneinander eingeregelt werden.

## Claims

1. A high-pressure system (1) comprising at least a vessel (2) designed for high pressure, a primary compressor (5), a secondary compressor (4), a high-pressure reactor (5), a high-pressure separator (6), a low-pressure separator (7) and a pump injection arrangement (10) configured for injecting at least one medium into the high-pressure reactor (5) and/or upstream of the high-pressure reactor (5) into at least one high-pressure polymerization process to at least two different pressure levels, wherein the pump injection arrangement (10)
- comprises a plurality of injection pump apparatuses (11, 12, 13) for at least one medium comprising olefins, substances having a double bond, alkenes, propylene or the like, and where the injection pump apparatuses (11, 12, 13) are coupled to the high-pressure reactor (5) and/or to one or more high-pressure conduit section(s) upstream of the reactor; and
- comprises a regulating unit (20a) which is coupled to the injection pump apparatuses and is configured for regulating the injection by at least two of the injection pump apparatuses;
where the pump injection arrangement (10) is configured for synchronized regulation of the injection pump apparatuses (11, 12, 13) with dependence on one another as well as for injecting the medium at flow rates greater than 150 liters per hour;
and wherein at least two of the synchronously regulated injection pump apparatuses (11, 12, 13) are double acting bidirectionally operating high-pressure pumps which are functionally coupled with at least single redundancy to the regulating unit (20a) in such a way that the pressure can be generated via at least two shafts (15) and the pressurized medium can be made available for injection via a high-pressure conduit (14).

2. The high-pressure system (1) as claimed in claim 1, wherein the injection pump apparatuses (11, 12, 13) are synchronized with dependence on one another in such a way that a phase offset of 180° of pistons (16) of at least two of the bidirectional injection pump apparatuses is set.

3. The high-pressure system (1) as claimed in claim 1 or 2, wherein the respective double acting high-pressure pump has a double acting hydraulic cylinder which is connected to two high-pressure heads in such a way that a high-pressure conduit (14) is provided.

4. The high-pressure system (1) as claimed in any of the preceding claims, wherein the pump injection arrangement (10) has at least one linear position transducer coupled to one or more shafts (15) of the pump injection arrangement.

5. The high-pressure system (1) as claimed in any of the preceding claims, wherein the plurality of injection pump apparatuses (11, 12, 13) are functionally coupled in a closed regulating circuit, in particular with the pump injection arrangement (10) comprising at least one proximity switch coupled to one or more shafts (15) of the pump injection arrangement.

6. The high-pressure system (1) as claimed in any of the preceding claims, wherein the pump injection arrangement (10) comprises at least three injection pump apparatuses (11, 12, 13) for the at least one medium, where at least three of the injection pump apparatuses are double acting high-pressure pumps which are functionally coupled with at least double redundancy to the regulating unit (20a) in such a way that the pressure can be generated via at least three shafts (15) and the pressurized medium can be provided for injection via the high-pressure conduit (14).

7. The high-pressure system (1) as claimed in the preceding claim 6, wherein the three shafts (15) are synchronized in such a way that a phase offset of individual pistons of the injection pump apparatuses of not more than 120° is set.

8. A method for controlling and/or regulating a pump injection arrangement (10) of the high-pressure system (1) according to any of the preceding device claims during injection of at least one medium from the group consisting of comonomers, initiators, modifiers at at least one process position into at least one high-pressure polymerization process, comprising multistage pressure buildup and a high-pressure reaction;
where injection by means of a plurality of injection pump apparatuses (11, 12, 13) is regulated in a synchronized manner by a regulating unit (20a) with dependence of the injection pump apparatuses (11, 12, 13) on one another, and
where at least two of the synchronously regulated injection pump apparatuses (11, 12, 13) are operated as double acting bidirectionally operating high-pressure pumps and are functionally regulated with at least single redundancy in such a way that the pressure is generated via at least two shafts and the pressurized medium is made available for injection via a high-pressure conduit (14), and where the medium is injected at flow rates of greater than 150 liters per hour or greater than 500 liters per hour and are regulated in such a way that the medium is injected exclusively by means of double-acting pumps above this pump output.

9. The method as claimed in the preceding method claim 8, wherein at least two of the injection pump apparatuses are regulated with a phase offset of 180° of the pistons with dependence on one another or wherein a phase offset of individual pistons of the injection pump apparatuses of not more than 120° is set, especially in the case of exactly three bidirectional injection pump apparatuses.

10. The method as claimed in either of the preceding method claims, wherein the pressurized medium is provided at the appropriate process position on a high-pressure conduit of all injection pump apparatuses regulated for this process position.

11. The method as claimed in any of the preceding method claims, wherein the regulation is carried out position-based on the basis of measured data of at least one linear position transducer coupled to one or more shafts of the pump injection arrangement.

12. The method as claimed in any of the preceding method claims, wherein the regulation is carried out in a closed regulating circuit.

13. The method as claimed in any of the preceding method claims, wherein at least three of the synchronously regulated injection pump apparatuses are operated as double acting bidirectionally operating high-pressure pumps and are functionally regulated with at least double redundancy in such a way that the pressure can be generated via at least three shafts and the pressurized medium is provided for injection via a high-pressure conduit.

14. The use of at least two injection pump apparatuses each configured as double acting bidirectional high-pressure pumps in a high-pressure system (1) as claimed in any of the preceding apparatus claims in a high-pressure polymerization process, for injection of highly pressurized medium from the group consisting of comonomer, initiators, modifiers, in a method as claimed in any of the preceding method claims, at flow rates of the injected medium of greater than 150 liters per hour, where the at least two injection pump apparatuses are regulated with a phase offset of 180° or not more than 120° with dependence on one another.

## Revendications

1. Système à haute pression (1) comprenant au moins une cuve (2) conçue pour la haute pression, un compresseur primaire (3), un compresseur secondaire (4), un réacteur à haute pression (5), un séparateur à haute pression (6), un séparateur à basse pression (7) et un ensemble d'injection par pompe (10) conçu pour injecter au moins un milieu dans le réacteur à haute pression (5) et/ou en amont du réacteur à haute pression (5), dans au moins un processus de polymérisation à haute pression, à au moins deux niveaux de pression différents, l'ensemble d'injection par pompe (10) comportant
- une pluralité de dispositifs à pompe d'injection (11, 12, 13) destinés à au moins un milieu comprenant des oléfines, des substances à doubles liaisons, des alcènes, du propylène ou analogue, et les dispositifs à pompe d'injection (11, 12, 13) étant accouplés au réacteur à haute pression (5) et/ou à une ou plusieurs portions de conduite à haute pression en amont du réacteur ; ainsi que
- une unité de régulation (20a) accouplée aux dispositifs à pompe d'injection et conçue pour réguler l'injection par au moins deux des dispositifs à pompe d'injection ;
l'ensemble d'injection par pompe (10) étant conçu pour réguler de manière synchronisée des dispositifs à pompe d'injection (11, 12, 13) les uns en fonction des autres et injecter le milieu à des débits supérieurs à 150 litres par heure ;
et au moins deux des dispositifs à pompe d'injection (11, 12, 13) régulés entre eux de manière synchronisée étant conçus comme des pompes à haute pression bidirectionnelles à double action qui sont accouplées à l'unité de régulation (20a) par une technique de régulation au moins à simple redondance de manière à générer la pression sur au moins deux axes (15) et à fournir le milieu sous pression pour l'injection par le biais d'une conduite à haute pression (14).

2. Système à haute pression (1) selon la revendication 1, les dispositifs à pompe d'injection (11, 12, 13) étant synchronisés les uns en fonction des autres de manière à régler un déphasage de 180° des pistons (16) d'au moins deux des dispositifs à pompe d'injection bidirectionnelle.

3. Système à haute pression (1) selon la revendication 1 ou 2, la pompe à haute pression à double effet respective comportant un vérin hydraulique à double action qui est relié à deux têtes à haute pression de manière à alimenter une conduite à haute pression (14).

4. Système à haute pression (1) selon l'une des revendications précédentes, l'ensemble d'injection par pompe (10) comprenant au moins un transducteur de position linéaire accouplé à un ou plusieurs axes (15) de l'ensemble d'injection par pompe.

5. Système à haute pression (1) selon l'une des revendications précédentes, la pluralité de dispositifs à pompe d'injection (11, 12, 13) étant accouplés dans un circuit de régulation fermé par une technique de régulation, en particulier l'ensemble d'injection par pompe (10) comprenant au moins un commutateur de proximité accouplé à un ou plusieurs axes (15) de l'ensemble d'injection par pompe.

6. Système à haute pression (1) selon l'une des revendications précédentes, l'ensemble d'injection par pompe (10) comportant au moins trois dispositifs à pompe d'injection (11, 12, 13) destinés à l'au moins un milieu, au moins trois des dispositifs à pompe d'injection étant conçus comme des pompes à haute pression à double action qui sont accouplées à l'unité de régulation (20a) par une technique de régulation au moins à double redondance de manière à générer la pression sur au moins trois axes (15) et fournir le fluide sous pression pour l'injection par le biais de la conduite à haute pression (14).

7. Système à haute pression (1) selon la revendication précédente 6, les trois axes (15) étant synchronisés de manière à régler un déphasage des pistons individuels des dispositifs à pompe d'injection de 120° maximum.

8. Procédé de commande et/ou de régulation d'un ensemble d'injection par pompe (10) du système à haute pression (1) selon l'une des revendications de dispositif précédentes lors de l'injection d'au moins un milieu du groupe comprenant des comonomères, des amorceurs, des modificateurs à au moins un point de processus dans au moins un processus de polymérisation à haute pression, ledit procédé comprenant une montée en pression à plusieurs étapes et une réaction à haute pression, l'injection au moyen d'une pluralité de dispositifs à pompe d'injection (11, 12, 13) étant régulée les uns par rapport aux autres par une unité de régulation (20a) de manière synchronisée en fonction des dispositifs à pompe d'injection (11, 12, 13), et au moins deux des dispositifs à pompe d'injection (11, 12, 13) régulés entre eux de manière synchronisée étant utilisés comme des pompes à haute pression bidirectionnelles à double action et étant alors régulés par une technique de régulation au moins à simple redondance de manière à générer la pression sur au moins deux axes et à fournir le fluide sous pression pour l'injection par le biais d'une conduite à haute pression (14), et le milieu étant injecté à des débits supérieurs à 150 litres par heure ou supérieurs à 500 litres par heure, et étant régulé de manière à injecter le milieu à partir de cette capacité de pompe exclusivement au moyen de pompes à double action.

9. Procédé selon la revendication de procédé précédente 8, au moins deux des dispositifs à pompe d'injection étant régulés en fonction l'un de l'autre avec un déphasage de 180° des pistons, ou un déphasage des pistons individuels des dispositifs à pompe d'injection étant régulé à 120° maximum, en particulier dans le cas d'exactement trois dispositifs à pompe d'injection bidirectionnelle.

10. Procédé selon l'une des revendications de procédé précédentes, le milieu sous pression étant fourni au point de processus correspondant au niveau d'une conduite à haute pression de tous les dispositifs à pompe d'injection régulés pour ce point de processus.

11. Procédé selon l'une des revendications de procédé précédentes, la régulation étant effectuée en position sur la base de données de mesure d'au moins un transducteur de position linéaire accouplé à un ou plusieurs axes de l'ensemble d'injection par pompe.

12. Procédé selon l'une des revendications de procédé précédentes, la régulation étant effectuée dans une boucle de régulation fermée.

13. Procédé selon l'une des revendications de procédé précédentes, au moins trois des dispositifs à pompe d'injection régulés entre eux de manière synchronisée étant utilisés comme des pompes à haute pression bidirectionnelles à double action et étant régulés par une technique de régulation au moins à double redondance de manière à générer la pression par le biais d'au moins trois axes et fournir le milieu sous pression pour l'injection par le biais d'une conduite à haute pression.

14. Utilisation d'au moins deux dispositifs à pompe d'injection conçus chacun comme des pompes à haute pression bidirectionnelle à double action en combinaison avec le système à haute pression (1) selon l'une des revendications de dispositif précédentes dans un processus de polymérisation à haute pression pour injecter le milieu à haute pression du groupe comprenant des comonomères, des initiateurs, des modificateurs, en combinaison avec un procédé selon l'une des revendications de procédé précédentes, à des débits de milieu injecté supérieurs à 150 litres par heure, les au moins deux dispositifs à pompe d'injection étant régulés en fonction l'un de l'autre avec un déphasage de 180° ou de 120° maximum.
